# EUROPÄISCHE PATENTSCHRIFT

(11) **EP 3 017 738 B1**
(45) Veröffentlichungstag und Bekanntmachung des Hinweises auf die Patenterteilung: **31.10.2018**
(21) Anmeldenummer: 15192524.5
(22) Anmeldetag: 02.11.2015
(51) Int. Cl.: A47J 43/07, A47B 91/04, A47J 47/16

(54) **STANDFUSS EINES GERÄTES, INSBESONDERE EINER TISCH-KÜCHENMASCHINE**
STAND OF A DEVICE, IN PARTICULAR A TABLE-TOP KITCHEN APPLIANCE
PIED DE SUPPORT D'UN APPAREIL, NOTAMMENT D'UNE MACHINE DE CUISINE DE TABLE

(30) Priorität: 06.11.2014 DE 102014116210
(43) Veröffentlichungstag der Anmeldung: 11.05.2016
(73) Patentinhaber: Vorwerk & Co. Interholding GmbH, 42275 Wuppertal (DE)
(72) Erfinder: Cornelißen, Markus, 53332 Bornheim (DE)
(74) Vertreter: Müller, Enno

(56) Entgegenhaltungen:
- EP-A1- 2 659 810
- EP-A1- 2 870 903
- WO-A1-2006/042432
- DE-U1-202011 000 995

## Beschreibung

Die Erfindung betrifft einen Standfuß eines Gerätes, insbesondere einer Tisch-Küchenmaschine, wobei das Gerät ein Gehäuse mit einem bei üblicher Aufstellung nach unten abragenden Fortsatz aufweist, der auf einem eine Standfläche ausbildenden Standteil unter Zwischenlage eines Weichteils aufsitzt, wobei das Weichteil in einem nach oben offenen Schalenabschnitt des Standteils aufgenommen ist und der in den Schalenabschnitt hineinragende Fortsatz auch quer zu einer Einfederungsbewegung durch eine Gewichtskraft des Gerätes beweglich in dem Schalenabschnitt aufgenommen ist, wobei weiter das Weichteil eine obere Beaufschlagungsfläche für den Fortsatz bildet.

Im Weiteren betrifft die Erfindung einen Standfuß eines Gerätes, insbesondere einer Tisch-Küchenmaschine, wobei das Gerät ein Gehäuse mit einem bei üblicher Aufstellung nach unten abragenden Fortsatz aufweist, der auf einem eine Standfläche ausbildenden Standteil unter Zwischenlage eines Weichteils aufsitzt, wobei das Weichteil in einem nach oben offenen Schalenabschnitt des Standteils aufgenommen ist.

Derartige Standfüße sind bereits in verschiedener Ausgestaltung bekannt geworden. Aus den GB-A-13 78 758 ist ein Standfuß bekannt, bei welchem der Fortsatz auf einem nach unten offenen Schalenteil aufsitzt und in der unteren Öffnung des Schalenteils ein Weichteil aufgenommen ist, das letztlich die Standfläche ausbildet. Der Fortsatz ist zudem in einem weiteren, das erste Schalenteil gleichgerichtet übergreifenden zweiten Schalenteil befestigt, wobei praktisch keine Bewegung quer zu einer Einfederungsbewegung durch eine Gewichtskraft möglich ist. Soweit gleichwohl eine solche Bewegung, in sehr geringem Ausmaß, stattfindet, liegen die aus Hartwerkstoff bestehenden Schalenwerkteilen zugleich unmittelbar aneinander an.

Aus der US-A-3 717 318 ist ein Standfuß bekannt, bei welchem in vergleichbarer Weise eingeschachtelt übereinander angeordneten Schalenteile vorgesehen sind, die jeweils nach unten öffnen. Im Unterschied zu dem vorbeschriebenen Stand der Technik ist lediglich die Bewegung der Schalenteile quer zu einer durch eine Gewichtskraft gegebenen Einfederungsbewegung durch ein weiteres Weichteil gedämpft.

Darüber hinaus ist zum Stand der Technik auf die EP-A1-2 659 810 zu verweisen. Bei dem hieraus bekannten Standfuß ist der in das Schalenteil hineinreichende Fortsatz auch quer zu einer Einfederungsbewegung durch eine Gewichtskraft des Gerätes beweglich in dem Schalenteil aufgenommen. Bei einer solchen Bewegung wirkt er zunächst und vorrangig unmittelbar mit dem in dem Schalenabschnitt aufgenommenen Weichteil zusammen. Ohne Wirkung einer Gewichtsbelastung durch das Gerät sitzt der Fortsatz nur auf einer Beaufschlagungsfläche des Weichteils auf und erstreckt sich in einem weiteren Bereich seitlich zu dem sich nach unten bezüglich der Aufsatzfläche anschließen den Bereichs des Weichteils. In dem weiteren Bereich ist stirnseitig des Fortsatzes keine Ausbildung des Weichteils vorgesehen.

Aus der nicht vorveröffentlichten EP 2870903 A1 ist ein Standfuß bekannt, der bezüglich der hier relevanten Merkmale dem aus der EP 2659810 A1 bekannten Standfuß entspricht.

Ausgehend von dem vorbeschriebenen Stand der Technik beschäftigt sich die Erfindung mit der Aufgabenstellung eine im Hinblick auf Dämpfung von Bewegungen günstige Ausgestaltung eines Standfußes anzugeben.

Diese Aufgabe ist beim Gegenstand des Anspruches 1 gelöst, wobei darauf abgestellt ist, dass ein Weichteil, ausgehend von der Beaufschlagungsfläche, auch ohne Gewichtsbelastung durch den Fortsatz, auch oben seitlich zu dem Fortsatz ausgebildet ist.Hiermit ist gleichsam eine auch schalenartige Gestaltung des Weichteils angegeben. Der Fortsatz ist endseitig über seine Länge auch bezüglich des lediglich auf der Beaufschlagungsfläche aufsitzenden Teils von dem Weichteil umgeben. Derselbe Teil des Fortsatzes ist dem genannten Bereich seitlich zu einer Wirkungsrichtung der Gewichtskraft und vertikal in Richtung der Gewichtskraft durch das Weichteil abfederbar. Es bedarf keines gesonderten Teils des Fortsatzes, der sich gegenüber der genannten Beaufschlagungsfläche - wiederum betrachtet ohne Gewichtsbelastung - weiter nach unten erstreckt. Der Fortsatz kann sich in dem genannten Bereich relativ zu dem Weichteil, auch relativ zu dem sich seitlich zu dem Fortsatz, oberhalb der Beaufschlagungsfläche, erstreckenden Bereich des Weichteils bewegen. Der Fortsatz ist mit dem Weichteil in dem genannten Bereich nicht verbunden, so dass eine Bewegung in einer Richtung quer zu der Einfederungsbewegung durch die Gewichtskraft zwar zu einem Zusammendrücken des sich seitlich zu dem Fortsatz in dem genannten Bereich erstreckenden Bereiches des Weichteils führen kann, nicht jedoch zugleich gegenüberliegend zu einer Zugbelastung auf das Weichteil.

Bevorzugt ist vorgesehen, dass der Fortsatz auf dem Weichteil mittels eines von dem Weichteil unter seitlicher Umfassung klemmgehalterten Hartteils auf sitzt. Auch hierdurch ist zunächst die seitliche Erstreckung des Weichteils im Hinblick auf den von oben aufsitzenden Fortsatz erreicht. Zugleich aber auch eine günstige Montage durch die ledigliche Klemmhalterung des Hartteils durch das Weichteil. Zwar ist in einem Benutzungszustand des Gerätes durch die Befestigung des Standfußes mittels des Fortsatzes an dem Gerät auch letztlich eine Halterung des Hartteils gegeben. Im Zuge der Montage ist aber das Hartteil schon an dem Schalenteil gehaltert, ohne dass es besonderer Maßnahmen bedarf. Es liegt eine günstige Vormontage der Baugruppe Schalenteil, Weichteil und Hartteil vor.

Weiter bevorzugt ist vorgesehen, dass das Weichteil mehrteilig ausgebildet ist und das ein weiterer Teil in einem nach unten offen Schalenabschnitt des Fortsatzes aufgenommen ist.

Darüber hinaus bevorzugt ist vorgesehen, dass das Weichteil eine freie Bodenfläche des Schalenteils vollständig ausfüllt und nur zufolge Deformation bei Gewichtsbelastung sich auch oben seitlich zu dem Fortsatz erstreckt.

Es ist im Weiteren bevorzugt, dass eine seitliche Zusammenwirkung des Fortsatzes mit dem Weichteil, soweit ein Hartteil vorgesehen ist, nur oberhalb des Hartteils ermöglicht ist. Der Fortsatz durchsetzt entsprechend das Hartteil bevorzugt nicht. Er sitzt vielmehr weiter bevorzugt lediglich reibschlüssig auf dem Hartteil auf.

Das Weichteil kann ausgehend von einem Scheibenteil gebildet sein, wobei ein Randbereich des Scheibenteils, soweit eine Erstreckung auch oberhalb der Beaufschlagungsfläche gegeben ist, im Benutzungszustand hochgeklappt ist. Somit kann ausgehend von einem einstückigen Teil, bspw. einem einstückigen Stanzteil, bspw. einem Schaumstoff-Stanzteil, das auch in der genannten seitlichen Richtung den Fortsatz umgreifende Weichteil bereitgestellt sein.

Der Randbereich des so gebildeten Weichteils weist bezogen auf den Herstellungszustand des Weichteils, also einen scheibenförmigen Zustand, bevorzugt nach radial außen vorstehende Fortsätze auf. Die Fortsätze können über den Umfang gleich ausgebildet sein und/oder über den Umfang gleich verteilt vorgesehen sein. Alle Fortsätze können zueinander gleich ausgebildet sein. Weiter bevorzugt sind die Fortsätze in Umfangsrichtung mit einem Umfangsabstand ausgebildet. Der Umfangsabstand kann bspw., wenn die Fortsätze verzahnungsartig gebildet sind, durch Täler zwischen einzelnen Zähnen gegeben sein. Das Weichteil ist in einem ersten Abschnitt, betrachtet im Einbauzustand, an einen Bodengrundriss des Schalenteils angepasst. Dieser Bodengrundriss und damit bevorzugt der erste Abschnitt sind bspw. kreisförmig. Weiter bevorzugt sind die Fortsätze ausgehend von einem solchen größten Bodengrundriss-Maß, im Falle des Kreises also ausgehend von einem größten Radius des Bodengrundriss, gebildet. Radial nach außen anschließend an den Radius erstrecken sich in diesem Fall im Herstellungszustand des Weichteils die einzelnen Fortsätze. Diese Fortsätze bilden entsprechend einen zweiten Abschnitt des Weichteils. Durch das Hochklappen ist bevorzugt erreicht, dass die Fortsätze im Einbauzustand in Umfangsrichtung zumindest über einen Teil ihrer Erstreckung, in diesem Einbauzustand also in ihrer Erstreckung nach oben, in Anlage aneinander sind.

Das Weichteil kann aus dem schon genannten Schaumstoff bestehen. Bevorzugt besteht es insofern aus einem Weichschaumstoff. Der Schaumstoff kann offenporig gebildet sein. Im Übrigen wird auf die weiteren Ausführungen nachstehenden hinsichtlich des Weichteils auch verwiesen.

Das Hartteil kann aus einem metallischen Werkstoff bestehen. Es kann bspw. ein Stahlteil sein. Das Hartteil weist gegenüber dem Weichteil, bezogen auf dessen unverformten Zustand bevorzugt eine geringe Dicke auf. Weiter bevorzugt ist die Dicke 1/3 des Hartteils oder weniger bis hin zu 1/10 oder 1/20 der Dicke des Weichteils im unverformten Zustand. Beispielsweise kann das Hartteil unabhängig von der genannten Dicke als übliche Unterlegscheibe gebildet sein.

Das Standteil kann einen Halterungsvorteil aufweisen, der mit dem Fortsatz des Gerätes zur Halterung des Standteils verbindbar ist bzw. im Nutzungszustand verbunden ist. Der Halterungsfortsatz kann bezogen auf einen Querschnitt mittig ausgebildet sein. Er kann sich bezüglich des Fortsatzes des Gerätes zu diesem innen erstrecken. Hierzu kann der Fortsatz bspw. zylinderartig oder in sonstiger Form als Hohlkörper, etwa auch im Sinne eines Vierkant- oder Mehrkantrohres, ausgebildet sein.

Das Standteil kann mit dem Fortsatz zur verliersicheren Halterung formschlüssig zusammenwirken. Auch kann der Fortsatz in dem Schalenabschnitt unter vertikaler Überdeckung zu dem Schalenabschnitt aufgenommen sein. Der Formschluss kann durch eine Übergreifscheibe erreicht sein. Die Übergreifscheibe kann an dem Halterungsfortsatz bspw. formschlüssig befestigt sein, bspw. durch eine Rastbefestigung, und an dem Fortsatz bspw. durch Aufliegen.

Das Weichteil kann auch mehrteilig ausgebildet sein. Insbesondere kann es einerseits, als erstes Teil, die Beaufschlagungsfläche für den Fortsatz in Richtung der wirkenden Gewichtskraft bilden und als zweites Teil, zunächst mit radialem bzw. seitlichem Abstand zu dem Fortsatz, einem Bereich, bei welchem der Fortsatz bei Verlagerung quer zur wirkenden Gewichtskraft zur Anlage kommen kann. Die beiden Teile des Weichteils können durch das Hartteil getrennt sein. Ein weiteres Teil des Weichteils kann auch in einem nach unten offenen Schalenabschnitt des Fortsatzes aufgenommen sein. Auch hier kann es mit Hilfe eines Hartteils, grundsätzlich wie vorstehend zu dem Schalenabschnitt des Standteils beschrieben, klemmgehaltert sein.

Die insgesamt beschriebene mögliche Mehrteiligkeit des Weichteils kann auch dahingehend genutzt sein, dass Weichteile mit unterschiedlich eingestellter Härte angeordnet sind. Beispielsweise kann die Härte sich um 10 oder mehr Prozent unterscheiden, bis bspw. bis zu 100 %.

Eine weitere mögliche Lösung der Aufgabe ist nach einem Erfindungsgedanken bei einem Standfuß gegeben, bei welchem darauf abgestellt ist, dass das Standteil aus einem gummiartigen Weichmaterial besteht, dass das unmittelbar mit dem Standteil verbundene Weichteil aus einem Schaumstoff, bspw. PUR-Schaumstoff, besteht, und dass eine in Richtung einer von dem Standfuß aufgenommenen Gewichtskraft gemessene Dicke des Weichmaterials dem Zwei- oder Mehrfachen bis hin zu einem Zwanzigfachen der Dicke des Standteiles entspricht. Das Standteil ist bevorzugt zumindest im Bereich dessen Standfläche gummiartig ausgebildet, was weiter insbesondere einem Versetzen bzw. Verschieben der Küchenmaschine mit dessen Standfüßen relativ zur Abstellfläche, bspw. Tischfläche, entgegen wirkt.

Das aus einem Weichmaterial bestehende Standteil ist weiter bevorzugt unmittelbar mit dem Weichteil verbunden, bspw. mit diesem verklebt oder verschweißt. Das Weichteil ist bevorzugt ein Schaumstoff, weiter insbesondere ein Polyuretan-Schaumstoff. Entsprechend weist das Weichteil gute Dämpfungseigenschaften insbesondere hinsichtlich über den Fortsatz oder den Gehäuseabschnitt aus der Küchenmaschine heraus auf den Standfuß übertragene Stöße.

Mit Bezug auf die Richtung der auf den Standfuß, insbesondere auf das Standteil einwirkenden Gewichtskraft der Küchenmaschine, weiter mit Bezug auf eine senkrecht zur Standfläche des Standteiles betrachtete Richtung, weist das Weichteil eine Dicke auf, die eine ausreichende Dämpfung von insbesondere vertikal eingeleiteten Stößen bietet, sowie quer zur Dickenrichtung des Weichteils betrachtete Horizontaldeformationen erlaubt. Das an dem Weichteil unmittelbar befestigte gummiartige Standteil verhindert hierbei, dass das Weichteil durch Reibung zur Aufstellfläche der Küchenmaschine, bspw. bei einem Verschieben des Gerätes, beschädigt wird.

Die Dicke des Weichteils entspricht bevorzugt dem Zwei- bis Zwanzigfachen der Dicke des Standteiles, weiter bevorzugt dem Sechs- bis Zwölffachen. Weiter bevorzugt kommt ein Weichteil zum Einsatz mit einer Dicke von bevorzugt mehr als 5 mm, weiter bevorzugt mehr als 6 mm bis hin zu 30 mm.

Die Ausführungen insbesondere hinsichtlich des Weichteils, die enthalten sind, können für alle hier beschriebenen Ausführungsformen Bedeutung haben.

Weiter bevorzugt ist das Standteil ein Elastomerteil, entsprechend bevorzugt ein formfestes, jedoch elastisch verformbares Weichkunststoffteil, welches Rückstelleigenschaften aufweist.

In weiter bevorzugter Ausgestaltung ist der Fortsatz oder Gehäuseabschnitt der Küchenmaschine mit dem ersten Weichteil unmittelbar verbunden. So ist diesbezüglich bevorzugt eine Klebeverbindung oder eine Schweißverbindung. Auch ist in diesem Zusammenhang bevorzugt, den Gehäuseabschnitt zugewandt dem ersten Weichteil als Flächenteil auszugestalten, wobei weiter bevorzugt eine unmittelbare Verbindung zwischen Gehäuseabschnitt und Weichteil über diese Fläche erfolgt. Es ergibt sich in bevorzugter Ausgestaltung eine sandwichartige Ausformung des Standfußes, mit in Richtung der von dem Standfuß aufgenommenen Gewichtskraft betrachtete Anordnung von Gehäuseabschnitt, Weichteil und Standteil.

In alternativer Ausgestaltung ist ein weiteres - im oben beschriebenen Sinne handelt es sich um ein erstes - Weichteil vorgesehen, das in einem nach oben offenen Schalenabschnitt aufgenommen ist, wobei der Fortsatz oder Gehäuseabschnitt auf dem weiteren Weichteil aufsitzt. Der nach oben offene Schalenabschnitt bildet insbesondere eine bevorzugt umlaufende Begrenzung eines durch den Schalenabschnitt gegebenen Ausweichraumes für das weitere Weichteil. Dieses Weichteil kann bei Bewegungen des Fortsatzes oder des Gehäuseabschnittes relativ zu dem Standteil im Überdeckungsbereich zu dem Fortsatz oder Gehäuseabschnitt zwischen dem Fortsatz oder Gehäuseabschnitt und der Wand des Schalenabschnittes komprimiert werden.

Das weitere Weichteil ist hierbei bevorzugt unverlierbar, weiter bevorzugt aber ohne stoffschlüssige Verbindung, in dem Schalenabschnitt angeordnet.

Weiter bevorzugt ist das weitere Weichteil hinsichtlich seiner Shorehärte so eingestellt, dass der geräteseitige Fortsatz oder Gehäuseabschnitt bei üblichem Maximalgewicht der Küchenmaschine das Weichteil nicht derart komprimiert, dass sich ein gleichsam starrer Übergang ergibt. Vielmehr ist die Härte so gewählt, dass auch dann immer noch sich ein elastisches Einfedern einstellen kann.

Bevorzugt ist weiter der Fortsatz oder Gehäuseabschnitt selbst gegenüber insbesondere dem weiteren Weichteil härter ausgebildet, insbesondere durch Ausbildung des Fortsatzes oder Gehäuseabschnittes aus Hartkunststoff oder Metall.

Der Schalenabschnitt sitzt in bevorzugter Ausgestaltung auf dem weiteren, unteren Weichteil auf. Der Schalenabschnitt, insbesondere dessen Bodenabschnitt ist entsprechend sandwichartig gefasst zwischen dem zweiten und dem ersten Weichteil.

Bevorzugt ist das weitere Weichteil kreisringförmig ausgebildet, was eine günstige Deformation des weiteren Weichteiles, insbesondere quer zu einer Gewichtskraft-Richtung und die entsprechende Rückstellfähigkeit unterstützt.

Das weitere Weichteil und/oder das Standteil sind in bevorzugter Ausgestaltung kreisscheibenförmig ausgebildet. Auch sind diesbezüglich andere, bevorzugt durchgehend plattenförmige Ausgestaltungen von unterem Weichteil und Standteil möglich, so bspw. einen mehreckigen Grundriss aufweisend. Insbesondere bei kreisscheibenförmiger Ausgestaltung des unteren Weichteils und/oder des Standteils ist ein Außendurchmesser gewählt, der dem Außendurchmesser des gegebenenfalls auf dem unteren Weichteil aufsitzenden Schalenabschnittes entspricht.

Bezüglich des einen oder beider Weichteile handelt es sich bevorzugt um einen offenporigen oder geschlossenporigen Schaumstoff, wobei geschlossenporiger Schaumstoff insbesondere im Zusammenhang bei einer Küchenmaschine Vorzüge aufweist.

Von Bedeutung ist auch, dass das eine oder beide Weichteile bevorzugt insgesamt, insbesondere in den ggf. durch den Fortsatz oder den Gehäuseabschnitt beaufschlagten Bereich, weicher eingestellt ist als das bevorzugt aus einem gummiartigen Weichmaterial bestehende Standteil. Das oder die Weichteile weisen entsprechend eine geringere Shorehärte auf als das Standteil.

Bevorzugt ist das Material des einen oder beider Weichteile und die Überdeckung des Fortsatzes bzw. Gehäuseabschnittes zu einem der Weichteile so gewählt bzw. eingestellt, dass sich bei einer Verschiebung von einem Millimeter bezüglich aller auf einer Unterlage aufstehenden Standfüße der Küchenmaschine (bevorzugt: vier Standfüße) eine Rückstellkraft von 5 N oder mehr bis hin zu bevorzugt 15 N, weiter bevorzugt etwa 10 N einstellt.

Zudem ist diesbezüglich bevorzugt, dass mit zunehmender Horizontalverschiebung der in Überdeckung zu den Weichteilen oder dem einen Weichteil liegenden Fortsätzen bzw. Gehäuseabschnitten die Rückstellkraft insbesondere des einen oder der mehreren Weichteile (jeweils) überproportional zunimmt. So stellt sich bevorzugt bei einer Verdopplung der Horizontalverschiebung von einem Millimeter auf 2 mm eine Rückstellkraft ein, die dem 2,1- bis 3-fachen, weiter bevorzugt etwa dem 2,5-fachen des Rückstellwertes bei einem Millimeter entspricht. Bevorzugt ergibt sich bei einer Horizontalverschiebung von 2 mm eine Rückstellkraft des einen oder der beiden Weichteile von etwa 25 N. Entsprechend ist eine nicht-lineare Zunahme der Rückstellkraft vorgesehen.

Ein Weichteil kann, wie angesprochen, aus einem Schaumstoff bestehen. Es kann hierbei nicht nur aus einem offenporigen oder geschlossenporigen, sondern auch aus einem gemischt-porigen Schaumstoff bestehen. Bevorzugt ist ein Polyurethan-Schaum, weiter bevorzugt ein gemischtzelliger Polyurethan-Schaumstoff mit teilweise geschlossenen und teilweise offenen Poren.

Bevorzugt weist ein Weichteil eine Zugfestigkeit (Minimalwert nach DIN 53571) von 0,5 bis 1,5 N/mm², weiter bevorzugt 0,56 bis 1,3 N/mm² auf. In bevorzugter Ausgestaltung ist eine Zugfestigkeit von 0,78 N/mm² vorgesehen.

Weiter bevorzugt ist ein Weichteil so eingestellt, dass ich in Anlehnung an die EN 826 ein statistisches Elastizitätsmodul von 0,05 bis 1,3 N/mm² einstellt, weiter bevorzugt 0,14 bis 0,75 N/mm². Zudem ist ein dynamisches Elastizitätsmodul nach DIN 53513 von 0,3 bis 1,8 N/mm², weiter bevorzugt 0,6 bis 1,3 N/mm² vorgesehen.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, ggf. also auch dimensionslos, insbesondere 1,01-fach etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in perspektivischer Darstellung eine Tisch-Küchenmaschine mit Standfüßen zum Aufstellen der Küchenmaschine auf einer Tischfläche;
- Fig. 2: eine perspektivische, teilweise aufgebrochene Darstellung eines Bodenbereiches der Küchenmaschine mit einem Standfuß in einer ersten Ausführungsform;
- Fig. 3: den Schnitt gemäß der Linie III-III in Fig. 2, eine im Wesentlichen unbelastete Grundstellung des Standfußes betreffend (keine Ausführungsform gemäß der Erfindung);
- Fig. 4: eine der Fig. 3 entsprechende Darstellung, eine zweite Ausführungsform des Standfußes betreffend (keine Ausführungsform gemäß der Erfindung);
- Fig. 5: eine weitere Querschnittsansicht des unteren Bereichs der Küchenmaschine mit angebrachtem Standfuß;
- Fig. 6: den Standfuß gemäß Fig. 5 in Exposionsdarstellung;
- Fig. 7: eine Draufsicht auf das Weichteil des Standfuß gemäß Fig. 5 bzw. Fig. 6;
- Fig. 8: einen Querschnitt durch den Gegenstand der Fig. 7, geschnitten entlang der Linie VIII-VIII;
- Fig. 9: eine Querschnittsansicht eines Standfußes in weiterer Ausführungsform (keine Ausführungsform gemäß der Erfindung);
- Fig. 10: eine Querschnittsansicht eines Standfußes in weiterer Ausführungsform;
- Fig. 11: eine Querschnittsansicht eines Standfußes in weiterer Ausführungsform (keine Ausführungsform gemäß der Erfindung);
- Fig. 12: eine Querschnittsansicht eines Standfußes in weiterer Ausführungsform und
- Fig. 13: eine Querschnittsansicht eines Standfußes in weiterer Ausführungsform (keine Ausführungsform gemäß der Erfindung).

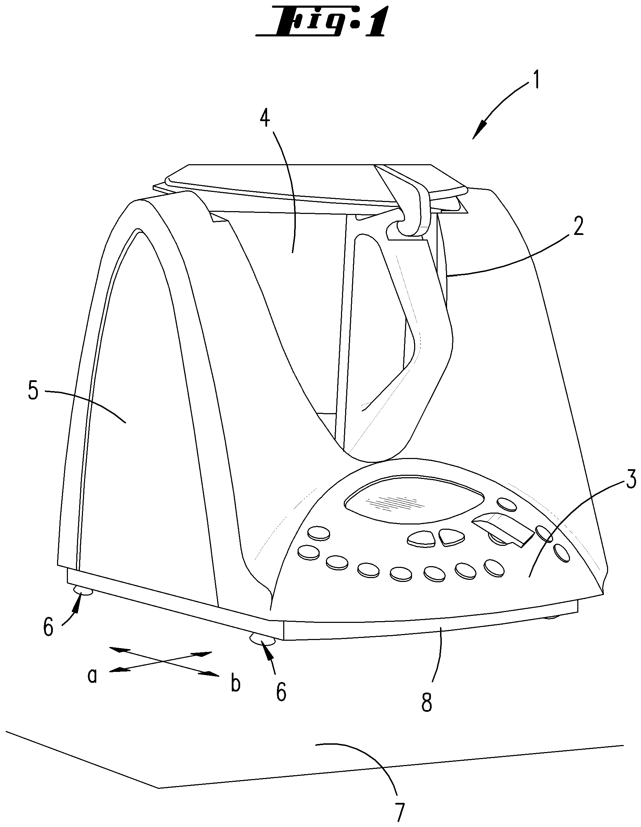

Dargestellt und beschrieben ist zunächst mit Bezug zu Fig. 1 eine Küchenmaschine 1 mit einer Rührgefäß-Aufnahme 2 und einem Bedienfeld 3.

Der Küchenmaschine 1 ist ein Rührgefäß 4 zugeordnet. Dieses sitzt in der Rührgefäß-Aufnahme 2 ein. In dem Rührgefäß 4 ist zugeordnet einem Rührgefäßboden bevorzugt ein Rührwerk vorgesehen, welches über einen in der Küchenmaschine 1 unterhalb der Aufnahme 2 angeordneten, nicht dargestellten. Elektroantrieb antreibbar ist.

Das Gehäuse 5 der Küchenmaschine 1 stützt sich über Standfüße 6 auf einer Fläche, hier einer Tischfläche 7, ab. Die Standfüße 6 sind hierzu unterseitig eines Gehäusebodens 8 befestigt.

Die Küchenmaschine 1 ist unter anderem geeignet zur Herstellung von Teigen. In einem solchen Teigmodus wird mit dem sich drehenden Rührwerk durch die Zähigkeit des Teiges ein hoher Widerstand entgegengesetzt. Das erforderliche Antriebsmoment des Motors wird, natürlich bei sonstigem Motorbetrieb auch, über das Gehäuse 5 und die Standfüße 6 abgestützt. Ist die Teigkugel ungünstig im Rührgefäß 4 angeordnet, bleibt das Rührwerk ggf. kurzzeitig im Teig stecken. Zufolge dessen wird das Drehmoment kurzzeitig erhöht. Auch ein solcher Momentenstoß wird von den Standfüßen 6 kompensiert, so dass sich das Gerät nicht ruckartig und sprunghaft um seinen Schwerpunkt dreht. Darüber hinaus und unabhängig hiervon werden über die Standfüße 6 Vibrationen bzw. insbesondere vertikale Stöße in Richtung auf die Tischfläche 7 kompensiert.

Die Bewegung des Gehäuses 5 in horizontaler Richtung (vgl. Pfeile a und b in Fig. 1) wird zugelassen. Das Gehäuse 5 kann sich relativ zu den Standfüßen 6 bzw., wie nachstehend näher erläutert, relativ zu einem Teilabschnitt der Standfüße 6 in der horizontalen Ebene bewegen. Die gegebenenfalls sprungartig eingeleitete Energie wird in Reibung und/oder Rückstell- und Verformungsenergie umgewandelt. Die Standfüße 6 sind hierbei bevorzugt auf der Standfläche - hier der Tischfläche 7 - nur aufsitzend und durch Reibschluss an einer Bewegung relativ zu der Standfläche gehindert. Darüber hinaus sind durch die Ausgestaltung der Standfüße 6 zudem auch relative Vertikalbewegungen des sich über die Standfüße 6 abstützenden Gehäuses 5, insbesondere relativ zu einem Teilabschnitt der Standfüße 6 gegeben.

Jeder Standfuß 6 ist im Wesentlichen zweiteilig gestaltet, wobei ein Teil gehäusefest vorgesehen ist. Bei diesem gehäusefesten Teil handelt es sich bevorzugt um einen Fortsatz 9 oder einen Gehäuseabschnitt 10, der gehäuseseitig, insbesondere gehäusebodenseitig, aus- oder angeformt ist. Im Falle eines Fortsatzes 9 ragt dieser bevorzugt nach vertikal unten über die nach unten gerichtete Gehäusebodenfläche frei ab. In alternativer Ausgestaltung ist der Fortsatz 9 bevorzugt oberhalb des Gehäusebodens 8 mit einem Wiegebalken einer Wägevorrichtung bevorzugt starr verbunden, welcher Wiegebalken anderenends wiederum an dem Gehäuse, insbesondere gehäusebodenseitig angreift.

Der Fortsatz 9 bzw. der Gehäuseabschnitt 10 ist als Starrteil ausgebildet, weiter bevorzugt zufolge einstückiger, materialeinheitlicher Ausgestaltung zusammen mit dem Gehäuseboden 8. Entsprechend kann es sich bei dem Fortsatz 9 oder dem Gehäuseabschnitt 10 um einen Hartkunststoff- oder Metallkörper handeln, der weiter bevorzugt mit Bezug auf eine zentral den Fortsatz 9 bzw. den Gehäuseabschnitt 10 durchsetzende Vertikalachse x rotationssymmetrisch ausgebildet ist. Neben der einstückigen Ausgestaltung ist weiter alternativ ein Fortsatz 9 oder Gehäuseabschnitt 10 vorgesehen, der unterseitig am Gehäuseboden 8 festlegbar, bspw. einschraubbar ist.

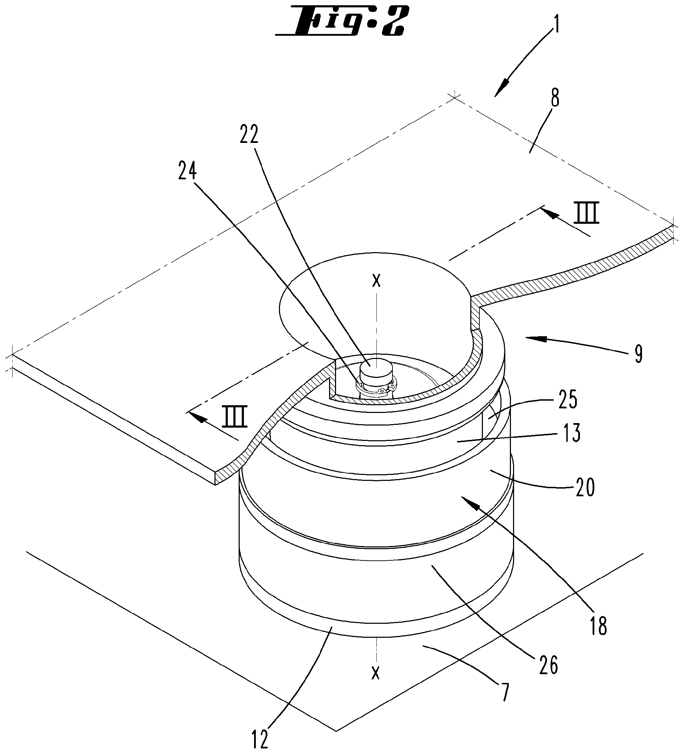

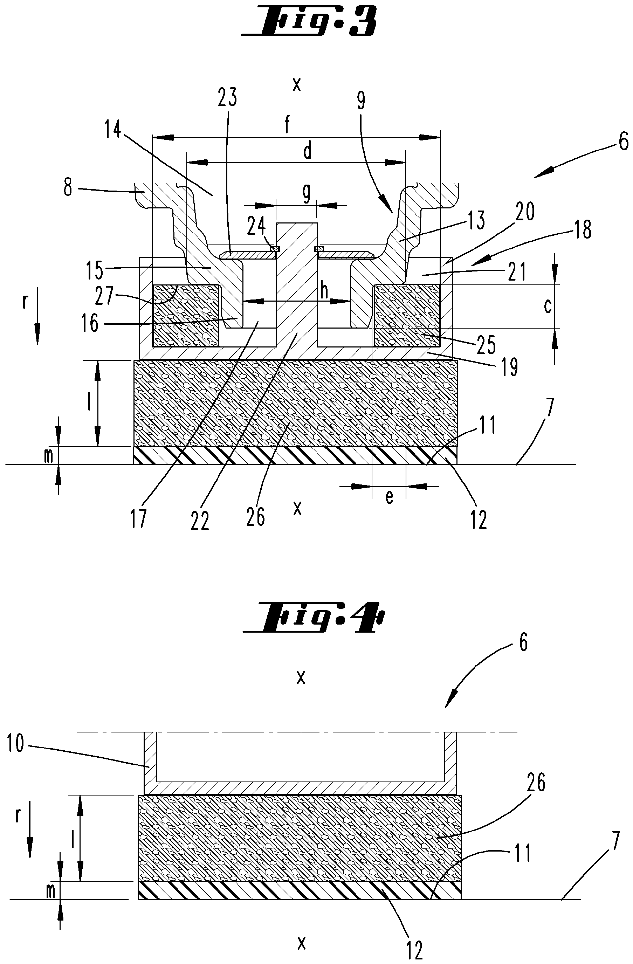

In dem insbesondere in den Figuren 2 und 3 dargestellten ersten Ausführungsbeispielen sitzt der gehäuseseitige Fortsatz 9 im Wesentlichen auf einem eine Standfläche 11 ausbildenden Standteil 12 auf.

Der Fortsatz 9 ist im Wesentlichen als rotationssymmetrischer Hohlkörper gebildet, mit einer umlaufenden Fortsatzwandung 13. In die durch die Fortsatzwandung 13 umfasste Röhrenöffnung 14 ist mit vertikalem Abstand zur nach vertikal unten freien Randkante der Fortsatzwandung 13 ein Boden 15 einstückig und bevorzugt materialeinheitlich mit der Fortsatzwandung 13 eingezogen.

An dem Boden 15 ist unterseitig, entsprechend nach vertikal unten gerichtet, ein konzentrisch zur Vertikalachse x angeordneter Röhrenabschnitt 16 angeformt, dessen nach vertikel unten weisende Stirnfläche über die durch die nach unten weisende freie Randkante der Fortsatzwandung 13 definierte Horizontalebene hinausragt. Ein vertikaler Abstand c zwischen der sich in einer Horizontalebene erstreckenden Stirnfläche des Röhrenabschnittes 16 und der Stirnrandkante der Fortsatzwandung 13 entspricht bevorzugt einem Halben bis einem Zehntel, weiter bevorzugt etwa einem Drittel des Außendurchmessers d der Fortsatzwandung 13 im Bereich des Bodens 15.

Das freie radiale Abstandsmaß e zwischen der Wandungsaußenseite des Röhrenabschnittes 16 und der Wandungsaußenseite der Fortsatzwandung 13 im Bereich des Bodens 15 entspricht weiter bevorzugt etwa einem Halben bis einem Zehntel, weiter bevorzugt etwa einem Siebtel des Fortsatzwandungs-Außendurchmessers d.

Der Röhrenabschnitt 16 ist zentral durchsetzt von einem kreiszylinderförmigen Durchbruch 17, welcher zugleich auch den Boden 15 durchsetzt.

Weiter ist bevorzugt gemäß der ersten Ausführungsform ein nach vertikal oben offener Schalenabschnitt 18 vorgesehen. Dieser weist einen weiter bevorzugt kreisscheibenförmigen Schalenboden 19 und eine umlaufende, vorzugsweise zylinderförmige, Schalenwandung 20 auf. Die vertikale Höhe der Schalenwandung 20 entspricht bevorzugt im Wesentlichen dem vertikalen Erstreckungsmaß des Durchbruchs 17 in dem Fortsatz 9.

Der Innendurchmesser f des Schalenabschnitts 18 entspricht bevorzugt dem 1,1-bis 1,4-fachen des Außendurchmessers d der Fortsatzwandung 13, womit sich in einer wie in Fig. 3 dargestellten Grundausrichtung umlaufend zwischen der Fortsatzwandung 13 und der Schalenwandung 20 ein Ringspalt 21 einstellt.

Ausgehend von der schaleninnenseitigen Oberfläche des Schalenbodens 19 wächst ein bevorzugt im Querschnitt kreisscheibenförmiger und/oder zylindrischer Zapfen 22 aus. Dieser ist bevorzugt zentral zu dem Schalenabschnitt 18 angeordnet und einstückig, materialeinheitlich mit dem Schalenabschnitt 18 ausgeformt. Der Durchmesser g ist hierbei kleiner gewählt als der Innendurchmesser h des fortsatzseitigen Durchbruchs 17, wobei der Zapfen 22 den Durchbruch 17 durchtretend mit seiner nach vertikal oben weisenden Stirnfläche über die nach oben weisende Ebene des Fortsatzbodens 15 hinausragt. Bei konzentrischer Anordnung von Fortsatz 9 und Schalenabschnitt 18 ergibt sich zwischen dem Zapfen 22 und der Wandung des Durchbruchs 17 ein umlaufender Spalt, dessen Radialmaß bevorzugt gleich oder größer ist dem Radialmaß des Ringspaltes 21.

Der Schalenabschnitt 18 ist an dem Fortsatz 9 formschlüssig gehaltert. Hierzu ist eine Übergreifscheibe 23 vorgesehen, welche zentral durchsetzt ist von dem Zapfen 22 und bevorzugt auf der nach oben weisenden Oberfläche des Bodens 15 aufliegt. Ein oberhalb der Übergreifscheibe 23 wandungsaußenseitig an dem Zapfen 22 vorgesehener Kragen 24, bevorzugt in Form eines Sprengringes oder dergleichen, fesselt den Schalenabschnitt 18 über die Übergreifscheibe 23 an dem Fortsatz 9, dies unter Ermöglichung einer vertikalen Beweglichkeit des Schalenabschnittes 18, relativ zu dem Fortsatz 9, ausgehend von der Darstellung in Fig. 3 nach vertikal oben.

Bodenseitig des Schalenabschnittes 18 ist ein (ggf. zweites bzw. weiteres) Weichteil 25 vorgesehen. Dieses ist bevorzugt kreisringförmig gestaltet und besteht weiter bevorzugt aus einem Weichschaumstoff. Das Weichteil 25 sitzt in dem Schalenabschnitt 18 auf dem Schalenboden 19 auf und weist bevorzugt einen an den Innendurchmesser der Schalenwandung 20 angepassten Außendurchmesser auf. Der Innendurchmesser der Schalenwandung 20 ist vorstehend auch als größtes Bodengrundriss-Maß angesprochen. Der freie Innendurchmesser des Weichteiles 25 ist weiter bevorzugt angepasst an den Außendurchmesser des fortsatzseitigen Röhrenabschnittes 16, wobei weiter bevorzugt der Kreisring-Innendurchmesser des Weichteiles 25 etwa dem 1,01- bis 1,1-fachen des Röhrenabschnitt-Außendurchmessers entspricht.

Das Weichteil 25 ist in einer bevorzugten Ausgestaltung lediglich durch Reib- oder Formschluss in dem Schalenabschnitt 18 gehalten. In alternativer Ausgestaltung ist auch eine Befestigung diesbezüglich möglich, bspw. zufolge Verklebung.

Die vertikale Höhe des Weichteiles 25 entspricht weiter bevorzugt etwa zwei Dritteln der Höhe der Schalenwandung 18, wobei weiter auch vertikale Höhen des Weichteiles 25 von bevorzugt ein Fünftel bis sieben Achtel der Schalenwandungshöhe möglich sind.

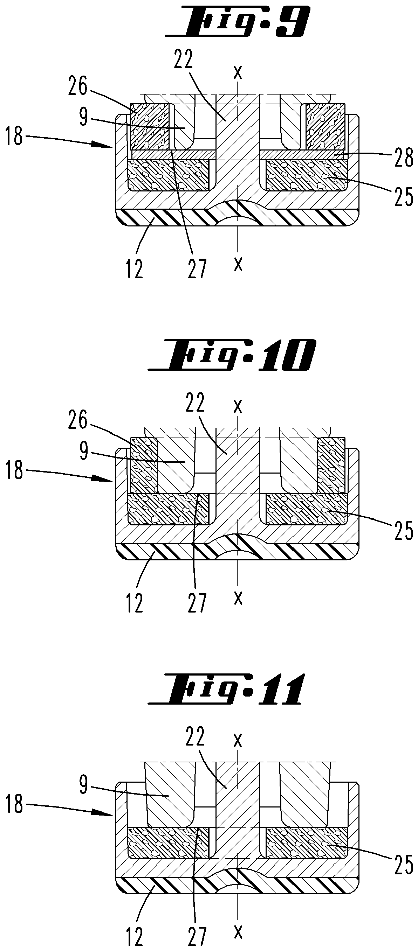

Die Anordnung ist weiter bevorzugt so gewählt, dass in einer unbelasteten Grundstellung gemäß der Darstellung in Fig. 3 (und auch der Darstellungen in den Fig. 9, 10 und 13) der Fortsatz 9 mit der nach unten weisenden freien Stirnrandkante der Fortsatzwandung 13 bzw. mit der Unterseite des Bodens 15 radial außerhalb des Röhrenabschnittes 16 auf der nach oben weisenden ringförmigen Oberfläche, der Beaufschlagungsfläche 27, des Weichteils 25 aufsitzt, während der Röhrenabschnitt 16 des Fortsatzes 9 in die Ringöffnung des Weichteiles 25 eintaucht, dies bevorzugt unter vertikaler Beabstandung der nach unten weisenden Röhrenabschnitt-Stirnfläche zur zugewandten Oberfläche des Schalenbodens 19 oder der Beaufschlagungsfläche 27 (Fig. 9, 10) des Weichteils 25. Er kann auch unmittelbar aufsitzen (Fig. 9 auf dem Hartteil 28, Fig. 10 unmittelbar auf dem Weichteil). Diese Stellung ist weiter bevorzugt zudem die Teleskop-Auszugsstellung von Fortsatz 9 und Schalenabschnitt 18, in welcher Stellung sich der Zapfen 22 mit seinem Kragen 24 oberseitig auf der übergreifenden Scheibe 23 abstützt, welch' letztere wiederum bevorzugt auf der zugewandten Oberfläche des fortsatzseitigen Bodens 15 aufliegt.

Das Weichteil 25 ist hinsichtlich der Härte bevorzugt so eingestellt, dass dieses in einer Grundbelastung (unter Berücksichtigung eines maximalen Gesamtgewichts der Küchenmaschine 1 und bei nicht aktiviertem Rührwerk) bevorzugt nicht oder nur unwesentlich über die Fortsatzwandung 13 komprimiert wird.

Der Schalenabschnitt 18 sitzt weiter bevorzugt auf einem (ersten bzw. weiteren) Weichteil 26 auf. Dieses kann auch durch das Standteil 12, das bevorzugt ein Elastomerteil ist (bspw. TPE) gegeben sein. Auch hierbei handelt es sich bevorzugt um einen Weichschaumstoff, weiter insbesondere Polyurethan-Schaumstoff. Der Schalenabschnitt 18 sitzt hierbei mit der nach unten weisenden glatten Fläche des Bodens 15 auf der zugewandten Fläche des Weichteils 26 bevorzugt vollflächig auf. Weiter bevorzugt sind der Schalenabschnitt 18 und das Weichteil 26 miteinander verhaftet, so insbesondere klebeverbunden.

Das Weichteil 26 ist in einem Schnitt quer zur vertikalen Achse x bevorzugt gleichgestaltet wie der Schalenabschnitt 18, so dass hier bevorzugt eine kreisscheibenförmige Ausbildung des Weichteils 26 vorliegt. Der Durchmesser des Weichteils 26 entspricht in bevorzugter Ausgestaltung dem Außendurchmesser der Schalenwandung 20.

Die in Richtung der von dem Standfuß 6 aufgenommenen Gewichtskraft (Pfeil r) betrachtete Dicke 1 des Weichteiles 26 entspricht bevorzugt einem Halben bis einem Achtel des Weichteil-Durchmessers, weiter bevorzugt etwa einem Viertel.

Unterseitig, d.h. dem Schalenabschnitt 18 abgewandt, ist das Weichteil 26 mit dem schon genannten vorzugsweise plattenförmigen Standteil 12 versehen. Dieses Standteil 12 kann bevorzugt aus dem genannten TPE oder einem gummiartigen Weichmaterial, insbesondere in Form eines Elastomerteils bestehen.

Das Standteil 12 weist bevorzugt denselben Durchmesser auf wie das Weichteil 26.

Die in Pfeilrichtung r betrachtete Dicke m des Standteiles 12 ist hierbei so gewählt, dass die Dicke 1 des Weichteiles 26 dem Zwei- bis Zwanzigfachen der Dicke m des Standteiles 12 entspricht, weiter bevorzugt etwa dem Vier- bis Fünffachen.

Das Standteil 12 ist bevorzugt unmittelbar mit dem Weichteil 26 klebeverbunden.

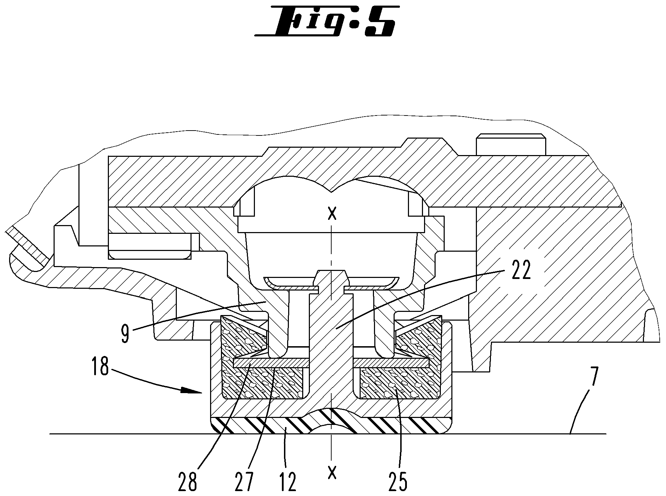

Auch bei der Ausführungsformen der Fig. 5 bis 13 ist jeweils ein Standteil 12 bevorzugt verwirklicht. Hier weiter bevorzugt unmittelbar angebracht auf einer Unterseite bzw. einem Boden des Schalenabschnittes 18.

Eine bei üblichem Betrieb der Küchenmaschine 1 in der Regel auftretende Stoßbelastung wirkt in vertikaler als auch in horizontaler Richtung. Entsprechend ist das kreisringfömige Weichteil 25 in dem Schalenabschnitt 18 sowohl von vertikal oben durch die Fortsatzwandung 13 als auch von radial innen nach radial außen im Bereich der Weichteil-Kreisringöffnung durch den Röhrenabschnitt 16 beaufschlagt.

Der Fortsatz 9 ist insgesamt in allen stoßrelevanten Richtungen durch das Weichteil 25 gedämpft gelagert, wobei das Weichteil 25 bevorzugt so ausgelegt ist, dass dieses über die elastischen Rückstellfähigkeiten den Fortsatz 9 jeweils tendenziell in die Ausgangsposition gemäß Fig. 3 drängt. Weiter ist die Härte des Weichteiles 25 so gewählt, dass bei üblichen vertikalen Stoßbelastungen insbesondere bei ordnungsgemäßem Gebrauch der Küchenmaschine 1, d.h. weiter bei ordnungsgemäßer Maximalbefüllung des Rührgefäßes 4, die nach vertikal unten weisende freie Stirnfläche des Röhrenabschnittes 16 auch in der Maximalbelastung einen vertikalen Abstand zu der zugewandten Oberfläche des Schalenbodens 19 einhält.

Der Schalenabschnitt 18 wiederum ist insgesamt in allen stoßrelevanten Richtungen durch das Weichteil 26 gedämpft gelagert. Auch das Weichteil 26 ist bevorzugt so ausgelegt, dass dieses über die elastischen Rückstellfähigkeiten den Schalenabschnitt 18 jeweils tendenziell in die Ausgangsposition gemäß0 Fig. 3 drängt.

Durch die Anordnung insbesondere des Weichteiles 26 sowie die bevorzugte unmittelbare Befestigung des Weichteils 26 mit dem Schalenboden 19, weiter bevorzugt auch mit dem Standteil 12, ist die Standsicherheit der Küchenmaschine 1 insgesamt verbessert, wobei das gummiartige Standteil 12 verhindert, dass das Weichteil 26 durch Reibung relativ zur Tischfläche 7 bspw. beim Verschieben der Küchenmaschine 1 beschädigt wird.

Die nach unten weisende Fläche des Standteiles 12 bildet hierbei die Standfläche 10 zur Zusammenwirkung mit bspw. der Tischfläche 7.

Fig. 4 zeigt eine alternative Ausführungsform des Standfußes 6. Hier ist ein sandwichartiger Aufbau bevorzugt. Bei einer bevorzugt insgesamt rotationssymmetrischen Ausgestaltung des Standfußes 6 mit Bezug zu einer Vertikalachse x ergeben sich auch in dieser Ausführungsform ein kreisscheibenförmiges Standteil 12, welches im Bereich einer ebenen Fläche unmittelbar mit einem kreisscheibenförmigen Weichteil 26 in Form eines Schaumstoffteiles verbunden ist. Auch hier ist diesbezüglich eine Klebeverbindung bevorzugt.

Das Weichteil 26 ist mit seiner dem Standteil 12 abgewandten Oberfläche unmittelbar und mit einem Gehäuseabschnitt 10 der Küchenmaschine 1 verbunden. Bevorzugt kommt hier eine Klebeverbindung zum Einsatz.

Der Gehäuseabschnitt 10 weist bevorzugt dem Weichteil 26 zugewandt eine ebene Fläche auf, insbesondere zur vollflächigen Verklebung mit dem Weichteil 26.

In bevorzugter Ausgestaltung ist der Gehäuseabschnitt 10 Teil des Gehäusebodens 8, erstreckt sich hierbei bevorzugt unterhalb einer allgemeinen nach unten weisenden Bodenebene. Gemäß dem vorbeschriebenen Ausführungsbeispiel kann sich der Gehäuseabschnitt 10 wie der Fortsatz 9 auch oberhalb der Bodenebene erstrecken und hierbei Teil bspw. eines Wiegebalkens sein.

In Pfeilrichtung r betrachtet ist eine Dicke 1 des Weichteiles 26 von mindestens 6 mm bis hin zu 30 mm bevorzugt. Bezüglich der Dickenverhältnisse von Weichteil und Standteil 12 wird auf die Ausführungen zu dem zuvor beschriebenen Ausführungsbeispiel verwiesen. Unabhängig hiervon oder in Kombination hierzu kann das Weichteil 25 eine Dicke von 2 bis 10 mm aufweisen.

Anstelle des Standteils 12 in Form eines gummiartigen Weichmaterials ist in einer weiteren Ausführungsform der Weichschaum des Weichteiles 26 zumindest auf der der Auflagefläche - hier Tischfläche 7 - zugewandten Seite verhautet oder alternativ mit einer entsprechenden Kunststoffhaut überzogen. Diese Haut verhindert eine Beschädigung des Schaumstoffes bei einem Verschieben des Gerätes auf der Tischfläche 7. Im Sinne der Erfindung bildet die Haut das Standteil 12 mit der Standfläche 11 aus.

Fig. 5 ist eine weitere Ausführungsform wiedergegeben, bei welcher das Weichteil 25 ausgehend von der Beaufschlagungsfläche 27, auch ohne Gewichtsbelastung durch den Fortsatz 9, sich auch oben seitlich zu dem Fortsatz 9 erstreckt. Der Fortsatz 9 reicht hierbei nicht über die Beaufschlagungsfläche 27 hinaus nach unten. In weiterer Einzelheit sitzt der Fortsatz 9 auf der Beaufschlagungsfläche 27 mittels eines Hartteils 28 auf. Das Hartteil 28 kann bspw. durch eine übliche Unterlegscheibe gebildet sein. Oberhalb des Hartteils 28 kann das Weichteil 25 wie in dem dargestellten Ausführungsbeispiel bis nahe an oder berührend an einer Außenfläche des Fortsatzes 9 reichen. Bevorzugt ist jedoch ein radialer Abstand, bspw. im Bereich der Wandstärke des dort röhrenartig gebildeten Fortsatzes 9.

Mit der Beaufschlagungsfläche 27 ist vorzugsweise diejenige Fläche eines Weichteils angesprochen, die eine Gewichtskraft durch den Fortsatz 9 mittels dessen unterer freier Stirnfläche aufnimmt. Bei der Ausführungsform der Fig. 3 nimmt die Beaufschlagungsfläche 27 allerdings die entsprechende Kraft mittels der Stufenflächen des Bodens 15 auf. Bei den Ausführungsformen der Fig. 5 und 9 nimmt das Weichteil 25 mittels seiner Beaufschlagungsfläche 27 die Kraft auch nur mittelbar, vermittels des Hartteils 28 auf. Zudem ist bei den Ausführungsformen der Fig. 9 und 10 noch eine zusätzliche Aufnahme der Gewichtskraft durch das obere Weichteil oder einen oberen Abschnitt des Weichteils, eingeleitet über eine entsprechende Stufenfläche des Bodens 15 des Fortsatzes 9, gegeben.

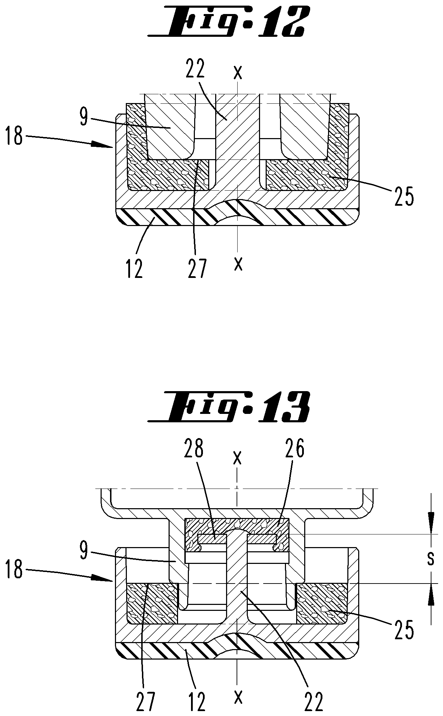

Bei der Ausführungsform der Fig. 13 ist die Einleitung der Gewichtskraft auf das Weichteil 25 auch nur durch die entsprechende Fläche des Bodens (Stufenabschnitt) des Fortsatzes 9 gegeben. Zusätzlich ist die Einleitung der Gewichtskraft bzgl. des oberen Weichteils 26 durch eine auf diese einwirkende, vorzugsweise das Weichteil insgesamt überspannende, Fläche des Gehäusebodens bzw. des Fortsatzes 9 gegeben.

Der Fortsatz 9 kann bevorzugt auf dem Hartteil 28 in seitlicher Richtung im gewissen Ausmaß wandern. Somit können entsprechende Bewegungen der Küchenmaschine günstig aufgenommen werden.

Im Weiteren ist auch beim Ausführungsbeispiel der Fig. 5 unterhalb des Schalenabschnittes 18 das Standteil 12, hier in Form eines Elastomerteiles, ausgebildet. Es ist bevorzugt mit dem Schalenabschnitt 18 unterseitig verklebt.

Die Halterung des Schalenabschnittes 18 an dem Fortsatz 9 ist bevorzugt - und auch bei dem dargestellten Ausführungsbeispiel - entsprechend der Ausführungsform der Fig. 3 realisiert, so dass in weiterer Einzelheit hierauf verwiesen werden kann.

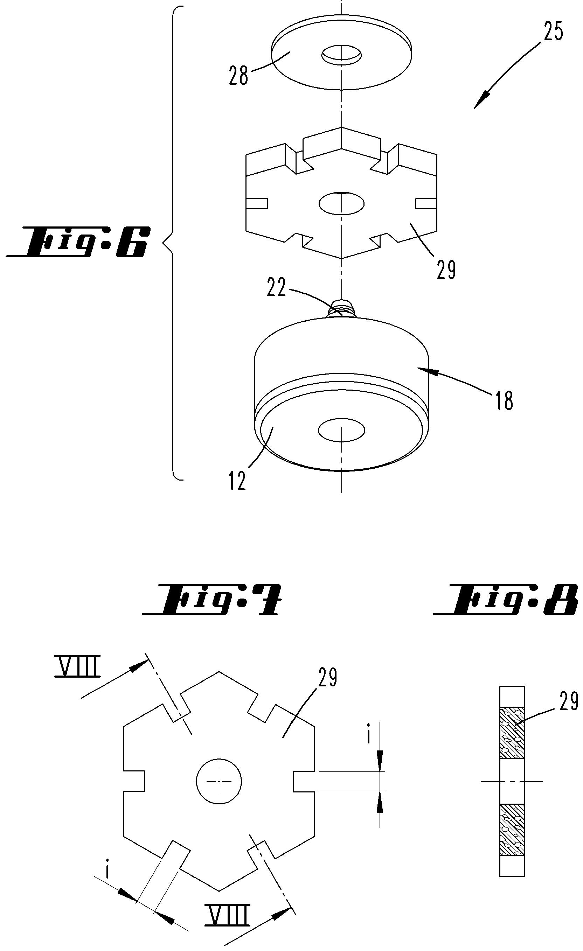

Wie sich im Weiteren aus den Figuren 6 bis 8 ergibt, ist das Weichteil 25 der Ausführungsform der Fig. 5 aus einem Schaumstoffteil, bspw. hergestellt durch einen Formschnitt, insbesondere einem Schaumstoff-Stanzzuschnitt, gebildet, das einzelne, über den Umfang gleichmäßig verteilte, nach außen stehende Fortsätze 29 aufweist. Die Fortsätze sind in sich ersichtlich mit einer pfeilartigen Grundrisskontur gebildet. Über den Umfang sind mehrere, bei dem Ausführungsbeispiel sechs, Fortsätze gleichmäßig verteilt vorgesehen. Zwischen den Fortsätzen ist in Umfangsrichtung ein Abstand i ausgebildet. Es sind somit Täler zwischen den einzelnen Fortsätzen 29 geschaffen. Der Abstand i geht radial innen bis auf ein Maß, das etwa einem größten freien Grundrissmaß des Bodens des Schalenabschnitts entspricht.

Im Einbauzustand gemäß Fig. 5 sind die Fortsätze 29 nach oben umgebogen oder geklappt. Aufgrund ihrer elastischen Rückstellkraft liegen sie an einer Innenfläche des Schalenabschnitts 18 an. Sie sind hierdurch zugleich aufgrund von Reibschluss in dem Schalenabschnitt gehaltert. Diese Halterung ist deutlich verstärkt durch die Wirkung des Hartteils 28, das zu einer vergleichsweisen starken Komprimierung im Bereich des Hartteils 28 (seitlich) führt. Dies aufgrund der bevorzugten Ausführung, dass ein Größtmaß des Hartteils 28, bei kreisförmiger Ausgestaltung also ein Außendurchmesser, ein Maß aufweist, das größer als es dem verbleibenden Innendurchmesser bei Umbiegung oder Abklappung des Weichteils nach oben entspricht. Somit ergibt sich in diesem Bereich eine besondere Verdichtung des Weichteils.

Mit Bezug zu Fig. 9 ist eine weitere Ausführungsform dargestellt. Sie unterscheidet sich von der Ausführungsform der Fig. 5 dadurch, dass das Hartteil 28 ein erstes Weichteil 25 und bei dieser Ausführungsform ein darüber angeordnetes weiteres Weichteil 26 voneinander sondert. Es handelt sich bei beiden Weichteilen bevorzugt um jeweils ein kreisringförmiges Teil. Der Innendurchmesser des oberen Weichteils 26 ist deutlich größer. Beispielsweise ist der Innendurchmesser um das Maß der Dicke (unbelasteter Zustand) des Weichteils 25 oder 26 größer als der Innendurchmesser des unteren Weichteils.

Während ein unterer Bereich des Fortsatzes 9 sich im Bereich des inneren, durch den genannten Innendurchmesser definierten, Freiraums in das obere Weichteil 26 hinein erstreckt und auf dem Hartteil 28 aufsitzt, ist das Weichteil 25 nicht von dem Fortsatz 9 durchsetzt. Der Fortsatz 9 ist weiter in Bezug auf das obere Weichteil 26 im Querschnitt stufenförmig gebildet. Ein vertikaler Stufenabschnitt ist in seitlicher Überdeckung (innen) zu dem oberen Weichteil 26, während der Fortsatz 9 mittels eine horizontalen Stufenabschnitt auf dem Weichteil 26 aufsitzt (das insofern eine weitere Beaufschlagungsfläche bildet). Auf die Stufenausbildung gemäß der Ausführungsform der Fig. 3 (Bezug insbesondere zu den mit den Bezugszeichen 15 und 16 angesprochenen Teilen) ist zu verweisen.

Die Ausführungsform der Fig. 10 entspricht der Ausführungsform der Fig. 9, wobei jedoch hier kein Hartteil 28 vorgesehen ist. Vielmehr sitzt eine untere Stirnfläche des Fortsatzes 9 unmittelbar auf der Beaufschlagungsfläche 27 des unteren Weichteils 25 auf. Im Weiteren ist bevorzugt wie ersichtlich der Fortsatz 9 auch mit einer größeren Wandstärke ausgebildet, so dass sich im Hinblick auf das Weichteil 25 eine geringere Flächenpressung ergibt. Eine Wandstärke kann 0,5- bis 1,5-fachen, bevorzugt ca. das 1-fache der vertikalen Dicke des Weichteils 25 betragen.

Bei der Ausführungsform der Fig. 11 ist lediglich ein Weichteil, entsprechend dem unteren Weichteil 25 der Fig. 9 und 10 vorgesehen. Dieses Weichteil ist in gleicher Weise kreisringförmig gebildet. Auf der Oberseite, der Beaufschlagungsfläche 27, sitzt der Fortsatz 9 unmittelbar auf. Eine seitliche Beeinflussung des Fortsatzes 9 durch das Weichteil 25 ergibt sich hier nur zufolge der Gewichtsbelastung und entsprechendem Einsinken des Fortsatzes 9 in das Weichteil 25. Der Innendurchmesser ist vergleichsweise klein. Es ist bevorzugt an den Außendurchmessers des Zapfens 22 angepasst. Die Wandstärke des Fortsatzes 9 ist auch hier bevorzugt vergleichswese groß gewählt. Derart, dass sich die untere Stirnfläche, mit welcher es auf dem Weichteil aufsitzt, vergleichsweise groß gestaltet. Beispielsweise kann die Wandstärke dem 0,5- bis 1,5-fachen, bevorzugt dem 1-fachen der vertikalen Dicke des Weichteils 25 entsprechen. Aufgrund der kreisringförmigen, durchgehend geschlossenen unteren Stirnfläche des Fortsatzes 9 ergibt sich damit eine gewünschte (vergleichswese geringe) Flächenpressung zu dem Weichteil 25.

Die Ausführungsform der Fig. 12 entspricht grundsätzlich der Ausführungsform der Fig. 5, jedoch ist auch hier kein Hartteil 28 vorgesehen. Vielmehr sitzt der Fortsatz 9, hier auch mit entsprechend bevorzugt größerem Wandungsdicke, unmittelbar mit seiner unteren Stirnfläche auf der Beaufschlagungsfläche 27 des Weichteils 25 auf. Eine Stufenfläche des Fortsatzes 9 (im Bereich eines Bodens 15), die etwa noch zusätzlich auf dem hochstehenden Bereich des Weichteils 25 (dessen Stirnfläche) aufsitzen würde, ist hier bevorzugt gerade nicht vorgesehen. Das Weichteil 25 kann als Schaumstoff-Formschnitt unmittelbar angepasst an den Innenraum des Schalenabschnittes 18 gebildet sein. Hier als in seiner dreidimensionalen schalenartigen Form bspw. unmittelbar integral hergestelltes (geschäumtes oder gefrästes)Weichteil. Es kann aber auch entsprechend der Erläuterung zu den Fig. 6 bis 8 mit Fortsätzen oder auch einem durchgehenden Rand gebildet sein. Der Rand kann durch Einpressen des Weichteils 25 in den Schalenabschnitt 18 der nach oben umgebogen oder umgeschlagen sein.

Bei der Ausführungsform der Fig. 13 ist zunächst unterseitig bezüglich des Fortsatzes 9 ein Stufenabschnitt ausgebildet wie er in Bezug auf die Ausführungsform der Fig. 9 im Hinblick auf die Zusammenwirkung mit dem oberen Weichteil 26 beschrieben ist. Mit einem vertikalen Stufenabschnitt sitzt der Fortsatz in einer inneren Öffnung des Weichteils 25 ein, während er mit einem oberen Stufenabschnitt unmittelbar auf eine obere Beaufschlagungsfläche 27 des Weichteils 25 aufsitzt.

Zusätzlich ist jedoch der Fortsatz 9 oberseitig in Form eines nach unten offenen Schalenabschnittes gebildet, in welcher ein zweites Weichteil 26 aufgenommen ist. Dieses zweite Weichteil 26 ist bevorzugt in gleicher Weise gehaltert, mittels eines Hartteiles 28, wie dies in Bezug auf Fig. 5 bzgl. der Halterung des Weichteils 25 in dem Schalenabschnitt 18 beschrieben ist.

Bei der Ausführungsform der Fig. 13 sind die Flächenverhältnisse des Aufsetzbereiches des Fortsatzes 9 auf dem (unteren) Weichteil 25 bevorzugt so vorgesehen, dass die Gewichtskraft, die durch den Fortsatz 9 übertragen wird, mindestens hälftig, bevorzugt aber überwiegend, etwa bis hin zu ¾ oder 8/9 nur durch das untere Weichteil 25 aufgenommen wird. Entsprechend kann das obere Weichteil 26 vorwiegend die Funktion haben, Verschiebungen des Gehäuses relativ zu der Tischfläche oder einer sonstigen Auflagefläche quer zu der Wirkung der Gewichtskraft aufzunehmen.

Alternativ kann aber auch vorgesehen sein, insbesondere, wenn das Hartteil 28 integral einstückig oder fest verbunden mit dem Zapfen 22 ausgebildet ist, dass dort ein großer Anteil der Gewichtskraft aufgenommen ist. Somit kann auch ein umgekehrtes Verhältnis erreicht sein, nämlich dass der genannte wesentliche Teil der Gewichtskraft, auch in dem genannten Ausmaß, tatsächlich oben aufgenommen wird, durch das Weichteil 26, und das Weichteil 25 wesentlich oder nur zur Aufnahme der genannten Verlagerungstendenzen quer zur Wirkung der Gewichtskraft dient. Insbesondere in diesem Fall kann die Kraft übertragende Stirnfläche des Fortsatzes 9 auch deutlich größer ausgebildet sein, als es in der Fig. 13 dargestellt ist.

Ein vertikaler Abstand s zwischen den Beaufschlagungsflächen des unteren Weichteils 25 und des oberen Weichteils 26 beträgt bevorzugt ¼ des Außendurchmessers d, wie er in Fig. 3 beschrieben ist, vermindert (2-fach) um den Abstand e, bis hin zur Hälfte, ¾ oder einem Ganzen entsprechendem Abmaß.

### Bezugszeichenliste:

- 1: Küchenmaschine
- 2: Rührgefäß-Aufnahme
- 3: Bedienfeld
- 4: Rührgefäß
- 5: Gehäuse
- 6: Standfuß
- 7: Tischfläche
- 8: Gehäuseboden
- 9: Fortsatz
- 10: Gehäuseabschnitt
- 11: Standfläche
- 12: Standteil
- 13: Fortsatzwandung
- 14: Röhrenöffnung
- 15: Boden
- 16: Röhrenabschnitt
- 17: Durchbruch
- 18: Schalenabschnitt
- 19: Schalenboden
- 20: Schalenwandung
- 21: Ringspalt
- 22: Zapfen
- 23: Übergreifscheibe
- 24: Kragen
- 25: Weichteil
- 26: Weichteil
- a: Bewegungsrichtung
- b: Bewegungsrichtung
- c: Abstand
- d: Außendurchmesser
- e: Abstand
- f: Innendurchmesser
- g: Durchmesser
- h: Durchmesser
- x: Vertikalachse
- m: Dicke
- l: Dicke
- r: Pfeil
- i: Abstand
- s: Abstand

## Patentansprüche

1. Standfuß (6) eines Gerätes, insbesondere einer Tisch-Küchenmaschine (1), wobei das Gerät ein Gehäuse (5) mit einem bei üblicher Aufstellung nach unten abragenden Fortsatz (9) aufweist, der auf einem eine Standfläche (10) ausbildenden Standteil (12) unter Zwischenlage eines Weichteils (25) aufsitzt, wobei das Weichteil (25) in einem nach oben offenen Schalenabschnitt (18) des Standteils (12) aufgenommen ist und der in das Schalenteil hineinreichende Fortsatz auch quer zu einer Einfederungsbewegung durch eine Gewichtskraft des Gerätes beweglich in dem Schalenteil aufgenommen ist, wobei weiter das Weichteil, eine obere Beaufschlagungsfläche (27) für den Fortsatz (9) bildet, **dadurch gekennzeichnet, dass** das Weichteil (25) ausgehend von der Beaufschlagungsfläche, auch ohne Gewichtsbelastung durch den Fortsatz (9), auch oben seitlich zu dem Fortsatz (9) ausgebildet ist.

2. Standfuß (6) nach Anspruch 1, **dadurch gekennzeichnet, dass** der Fortsatz auf dem Weichteil mittels eines von dem Weichteil unter seitlicher Umfassung klemmgehalterten Hartteils aufsitzt, wobei sich der Fortsatz (9) bis in seitliche Überdeckung zu dem Schalenabschnitt (18) erstreckt und in dem Schalenabschnitt (18) vertikal beweglich aufgenommen ist.

3. Standfuß (6) nach einem der vorhergehenden Ansprüche, **dadurch gekennzeichnet, dass** der Fortsatz (9) in dem Schalenabschnitt (18) auch horizontal beweglich aufgenommen ist.

4. Standfuß (6) nach einem der vorhergehenden Ansprüche, **dadurch gekennzeichnet, dass** das Weichteil (25) mehrteilig ausgebildet ist und dass ein weiteres Weichteil (26) in einem nach unten offenen Schalenabschnitt des Fortsatzes (9) einsitzt.

5. Standfuß (6) nach einem der vorhergehenden Ansprüche, **dadurch gekennzeichnet, dass** ein einzelnes Weichteil (25), das in dem Schalenabschnitt (18) des Standteils (12) aufgenommen ist, lediglich zufolge Deformation bei Gewichtsbelastung sich nach oben seitlich zu dem Fortsatz (9) erstreckt.

6. Standfuß nach einem der vorhergehenden Ansprüche, **dadurch gekennzeichnet, dass** das Standteil (12) einen Halterungsfortsatz (22) aufweist und dass der Halterungsfortsatz (22) mit dem Fortsatz (9) zur Halterung des Standteils (12) an dem Fortsatz (9) verbunden ist.

7. Standfuß nach einem der vorhergehenden Ansprüche, **dadurch gekennzeichnet, dass** der Fortsatz (9) mit dem Weichteil (25) zum einen durch Aufsitzen und zum anderen durch Zusammenwirkung mit einer freien Seitenfläche, bei relativer Beweglichkeit des Fortsatzes (9) zu der Seitenfläche, zusammenwirkt.

8. Standfuß nach einem der vorhergehenden Ansprüche, **dadurch gekennzeichnet, dass** das Standteil (12) formschlüssig mit dem Fortsatz (9) zur verliersicheren Halterung zusammenwirkt.

9. Standfuß nach einem der vorhergehenden Ansprüche, **dadurch gekennzeichnet, dass** der Fortsatz (9) in dem Schalenabschnitt (18) unter vertikaler Überdeckung zu dem Schalenabschnitt (18) aufgenommen ist.

10. Standfuß nach einem der vorhergehenden Ansprüche, **dadurch gekennzeichnet, dass** das Weichteil (25) zumindest teilweise kreisförmig gestaltet ist.

11. Standfuß nach einem der vorhergehenden Ansprüche, **dadurch gekennzeichnet, dass** ein Formschluss durch eine Übergreifscheibe (23) erreicht ist.

12. Standfuß nach einem der vorhergehenden Ansprüche, **dadurch gekennzeichnet, dass** der Fortsatz (9) in seinem in Überdeckung zu dem Standteil (12) befindlichen Abschnitt zumindest teilweise röhrenartig ausgebildet ist.

13. Standfuß nach einem der vorhergehenden Ansprüche, **dadurch gekennzeichnet, dass** das Material des Weichteils (25) und die Überdeckung des Fortsatzes (9) zu dem Weichteil (25) bezüglich aller auf einer Unterlage aufstehender Standfüße eines Gerätes so gewählt bzw. eingestellt ist, dass sich bei 1 mm horizontaler Verschiebung eine Rückstellkraft von 5 N oder mehr einstellt.

14. Standfuß nach einem der vorhergehenden Ansprüche, **dadurch gekennzeichnet, dass** mit zunehmender Horizontalverschiebung die Rückstellkraft überproportional zunimmt.

## Claims

1. A foot (6) of a device, in particular of a table-top kitchen appliance (1), wherein the device has a housing (5) comprising an appendage (9), which projects downwards in the case of a common setup, which rests on a foot part (12), which forms a base (10), by interlaying a soft part (25), wherein the soft part (25) is received in a shell section (18) of the foot part (12), which is open to the top, and the appendage, which projects into the shell section, is also movably received in the shell section at right angles to a deflection movement as a result of a weight force of the device, wherein the soft part furthermore forms an upper impact surface (27) for the appendage (9), **characterized in that**, starting at the impact surface, the soft part (25) is also embodied without a weight-loading by the appendage (9), also laterally to the appendage (9) on the top.

2. The foot (6) according to claim 1, **characterized in that** the appendage rests on the soft part by means of a hard part, which is clamp-mounted by the soft part by lateral enclosure, wherein the appendage (9) extends all the way to the lateral overlap to the shell section (18) and is received in the shell section (18) so as to be vertically movable.

3. The foot (6) according to one of the preceding claims, **characterized in that** the appendage (9) is also received in the shell section (18) so as to be horizontally movable.

4. The foot (6) according to one of the preceding claims, **characterized in that** the soft part (25) is embodied in several parts and that a further soft part (26) sits in a shell section of the appendage (9), which is open to the bottom.

5. The foot (6) according to one of the preceding claims, **characterized in that** an individual soft part (25), which is received in the shell section (18) of the foot part (12), extends laterally upwards to the appendage (9) only as a result of deformation in response to weight loading.

6. The foot (6) according to one of the preceding claims, **characterized in that** the foot part (12) has a mounting appendage (22), and that the mounting appendage (22) is connected to the appendage (9) for mounting the foot part (12) to the appendage (9).

7. The foot according to one of the preceding claims, **characterized in that** the appendage (9) interacts with the soft part (25) by resting thereon on the one hand and by interacting with a free side surface on the other hand, in response to a relative movability of the appendage (9) to the side surface.

8. The foot according to one of the preceding claims, **characterized in that** the foot part (12) interacts with the appendage (9) in a positive manner for a loss-proof mounting.

9. The foot according to one of the preceding claims, **characterized in that** the appendage (9) is received in the shell section (18) at a vertical overlap to the shell section (18).

10. The foot according to one of the preceding claims, **characterized in that** the soft part (25) is designed at least partially in a circular ring-shaped manner.

11. The foot according to one of the preceding claims, **characterized in that** a positive connection is attained by means of an overlap disk (23).

12. The foot according to one of the preceding claims, **characterized in that**, in its section, which overlaps with the foot part (12), the appendage (9) is at least partially embodied in a tubular manner.

13. The foot according to one of the preceding claims, **characterized in that** the material of the soft part (25) and the overlap of the appendage (9) to the soft part (25) is chosen or adjusted, respectively, in such a manner with regard to all of the feet of a device, which stand on a base that a reset force of 5 N or more is reached in response to a horizontal displacement of 1 mm.

14. The foot according to one of the preceding claims, **characterized in that** the reset force increases disproportionately with an increasing horizontal displacement.

## Revendications

1. Pied de support (6) d'un appareil, en particulier un robot de cuisine de table (1), dans lequel l'appareil comprend un boîtier (5) avec une extension (9) qui, en cas de placement habituel, fait saillie vers le bas et qui est en appui sur une partie de support (12) formant une surface de support (10) avec interposition d'une partie molle (25), dans lequel la partie molle (25) est agencée dans une partie de coque ouverte vers le haut (18) de la partie de support (12) et l'extension s'étendant dans la partie de coque est également agencée de manière mobile dans la partie de coque transversalement à un mouvement de déformation élastique sous le poids de l'appareil, dans lequel en outre la partie molle forme une surface d'appui supérieure (27) pour l'extension (9), **caractérisé en ce que** la partie molle (25) est formée également vers le haut en partant de la surface d'appui de manière latérale à l'extension (9), même en l'absence de charge pondérale exercée par l'extension (9).

2. Pied de support (6) selon la revendication 1, **caractérisé en ce que** l'extension repose sur la partie molle par le biais d'une partie dure maintenue avec serrage sous entourage latéral par la partie molle, dans lequel l'extension (9) s'étend jusqu'en recouvrement latéral avec la partie de coque (18) et est reçue dans la partie de coque (18) en étant mobile verticalement.

3. Pied de support (6) selon l'une des revendications précédentes, **caractérisé en ce que** l'extension (9) est reçue dans la partie de coque (18) en étant également mobile horizontalement.

4. Pied de support (6) selon l'une quelconque des revendications précédentes, **caractérisé en ce que** la partie molle (25) est formée en plusieurs parties et **en ce qu'**une partie molle supplémentaire (26) est disposée dans une partie de coque de l'extension (9) qui est ouverte vers le bas.

5. Pied de support (6) selon l'une quelconque des revendications précédentes, **caractérisé en ce qu'**une partie molle individuelle (25) qui est reçue dans la partie de coque (18) de la pièce de support (12), s'étend latéralement vers le haut par rapport à l'extension (9) uniquement en conséquence de la déformation sous charge pondérale.

6. Pied de support selon l'une des revendications précédentes, **caractérisé en ce que** la pièce de support (12) comporte une extension de maintien (22) et **en ce que** l'extension de maintien (22) est reliée à l'extension (9) pour le maintien de la pièce de support (12) à l'extension (9).

7. Pied de support selon l'une des revendications précédentes, **caractérisé en ce que** l'extension (9) coopère avec la partie molle (25) d'une part par appui et d'autre part par coopération avec une surface latérale libre en cas de mobilité relative de l'extension (9) par rapport à la surface latérale.

8. Pied de support selon l'une des revendications précédentes, **caractérisé en ce que** la partie de support (12) coopère avec l'extension (9) par verrouillage de formes aux fins de maintien captif.

9. Pied de support selon l'une des revendications précédentes, **caractérisé en ce que** l'extension (9) est reçue dans la partie de coque (18) en étant en recouvrement vertical avec la partie de coque (18).

10. Pied de support selon l'une des revendications précédentes, **caractérisé en ce que** la partie molle (25) est conçue au moins partiellement annulaire.

11. Pied de support selon l'une des revendications précédentes, **caractérisé en ce que** un verrouillage de formes est obtenu par un disque de chevauchement (23).

12. Pied de support selon l'une des revendications précédentes, **caractérisé en ce que** l'extension (9) est formée au moins partiellement tubulaire dans sa partie se trouvant en recouvrement avec la partie de support (12).

13. Pied de support selon l'une des revendications précédentes, **caractérisé en ce que** le matériau de la partie molle (25) et le recouvrement de l'extension (9) par rapport à la partie molle (25) sont choisis ou réglés eu égard à tous les pieds de support d'un appareil en appui sur une surface de support de manière qu'une force de rappel élastique de 5 N ou plus survienne pour un déplacement horizontal de 1 mm.

14. Pied de support selon l'une des revendications précédentes, **caractérisé en ce que** la force de rappel élastique augmente plus que proportionnellement en cas de déplacement horizontal croissant.
